# DEMANDE DE BREVET EUROPEEN

(11) **EP 1 079 324 A1**
(43) Date de publication de la demande: **28.02.2001**
(21) Numéro de dépôt: 99810796.5
(22) Date de dépôt: 03.09.1999
(51) Int. Cl.: G06K 7/00

(54) **Appareil électronique comprenant un groupe de cartes à puces**

(30) Priorité: 25.08.1999 EP 99810762
(71) Demandeur: Smartdata SA, 1920 Martigny (CH)
(72) Inventeur: Buttet, Jean-Pierre, 1920 Martigny (CH)
(74) Mandataire: BOVARD AG - Patentanwälte

(57) **Abrégé**

Appareil électronique (1) comportant un boîtier (5) pour recevoir des cartes à puces ayant des éléments de liaison électrique (6) qui sont situés sur au moins une de leurs faces latérales comprenant :
- des moyens (5A) de maintien des cartes à puces qui sont agencés pour maintenir ces cartes chacune dans une position et une orientation déterminée par rapport aux autres,
- des moyens de liaison électrique (8) avec chacun des éléments de liaison électrique d'une carte, lesquels (8) sont agencés pour coopérer avec les éléments de liaison électrique (6) d'une carte (3) positionnée dans le boîtier,
- un moyen de gestion des fonctionnalités des différentes cartes (3) placées dans le boîtier, par le biais des connexions électriques (10) établies entre les moyens de liaison (8).

## Description

L'invention se rapporte à un appareil électronique qui comprend un groupe de cartes à puces de fonctionnalités déterminées et également aux cartes à puces destinées à cet appareil. L'invention intéresse plus particulièrement, mais non exclusivement un appareil qui permet d'associer et/ou de combiner des fonctionnalités de cartes à puces différentes.

Par carte à puce, on désigne une pièce plate, avantageusement rectangulaire, qui supporte au moins un composant électronique équipé d'éléments chacun destiné à établir une liaison électrique avec une pièce distincte de la carte.

Un résultat que l'invention vise à obtenir est la réalisation d'un appareil électronique de manière modulaire, c'est à dire par regroupement de cartes à puces prévues pour être isolément utilisées dans des applications distinctes.

Un autre résultat que l'invention vise à obtenir est un appareil du type précité qui soit de taille réduite.

Par taille réduite, on désigne un appareil dont le format est approximativement celui d'une carte à puce et dont l'épaisseur correspond sensiblement à l'épaisseur de l'ensemble des cartes à puces qu'il comprend.

A cet effet l'invention a pour objet un appareil du type précité notamment caractérisé en ce que l'appareil consiste en un boîtier comprenant :
- des moyens de maintien des cartes à puces qui sont agencés pour maintenir ces cartes chacune dans une position et une orientation déterminée par rapport aux autres,
- des moyens de liaison électrique avec chacun des éléments de liaison électrique d'une carte, lesquels sont agencés pour coopérer avec les éléments de liaison électrique d'une carte positionnée dans le boîtier,
- un moyen de gestion des fonctionnalités des différentes cartes placées dans le boîtier, par le biais des connexions électriques établies avec les différentes cartes.

L'invention a également pour objet les cartes à puces destinées à cet appareil.

L'invention sera bien comprise à la lecture de la description ci-après faite à titre d'exemple non limitatif en regard des dessins ci-annexés qui représentent schématiquement :

Fig. 1 est une vue en coupe d'un dispositif électronique selon la présente invention.

Fig. 2 est une vue partielle d'une vue en coupe de ce dispositif électronique parallèle au niveau de la carte.

Fig. 3 est une vue partielle, en perspective, d'une carte à puces avec contacts sur une face.

Fig. 4 est une vue de la disposition de la carte à puces dans le dispositif électronique.

Fig 5 est une vue partielle d'une pile de trois cartes à puces et d'éléments de contact.

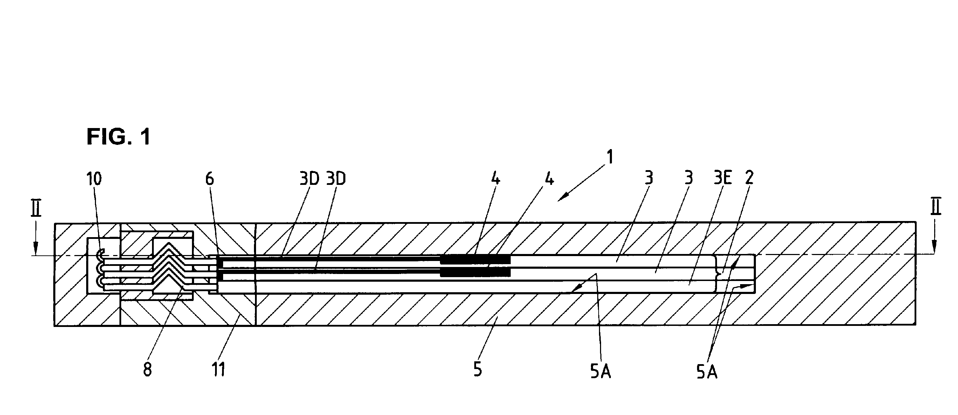

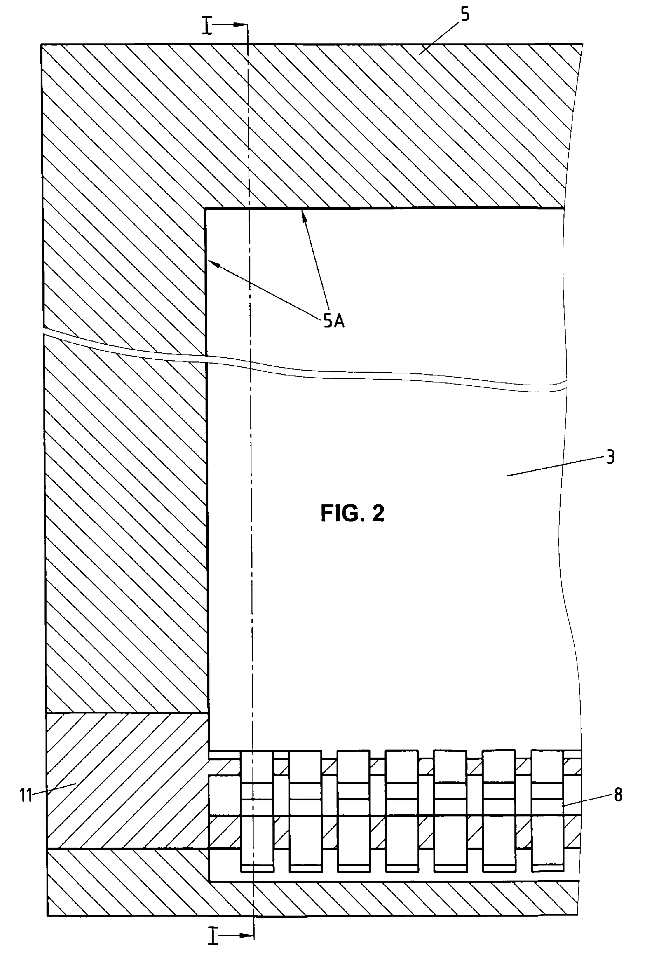

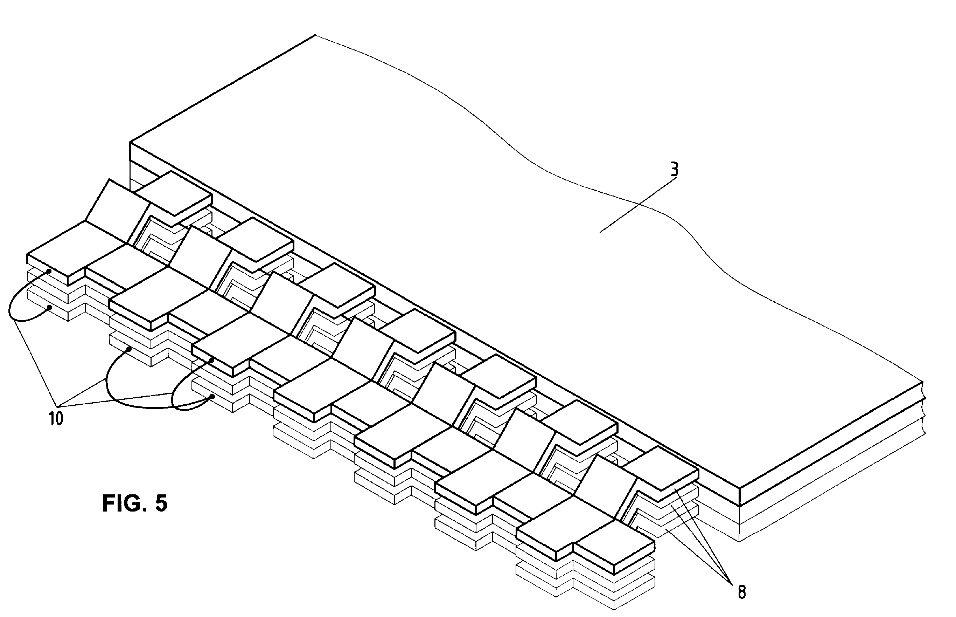

En se reportant aux Fig. 1 à 5, on voit un appareil électronique 1 qui comprend un groupe 2 de cartes à puces 3 ayant chacune une fonctionnalité déterminée.

Par exemple, les cartes ont des fonctionnalités différentes.

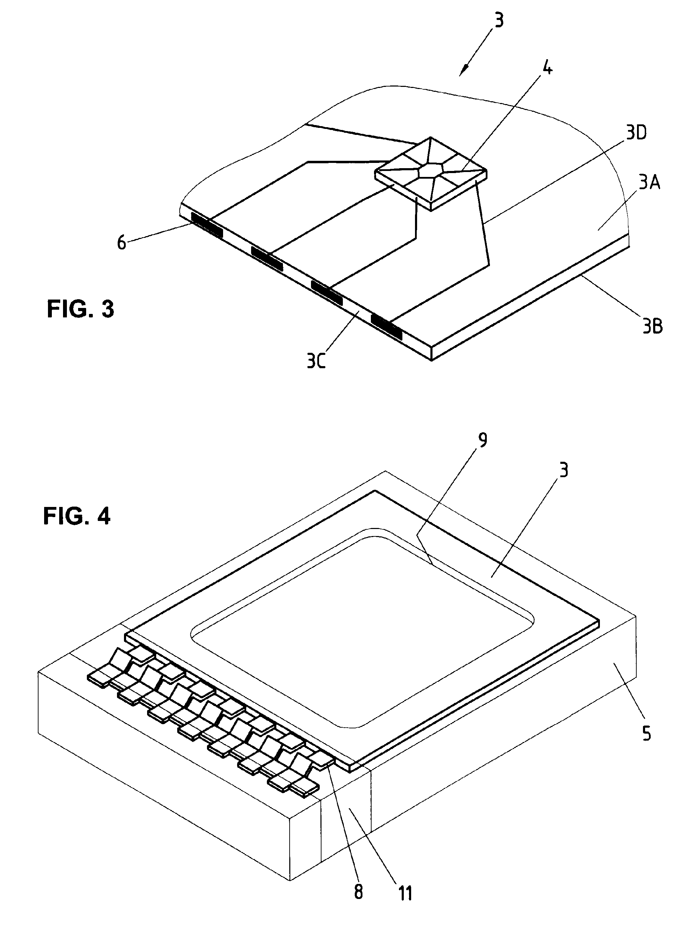

Par carte à puces 3 (Fig. 3), on désigne une pièce plate qui, avantageusement mais non limitativement rectangulaire, comprenant deux faces principales opposées 3A, 3B et des faces latérales étroites 3C, supporte au moins un composant électronique 4 équipé d'éléments 3D se terminant par un élément de liaison électrique 6 chacun destiné à établir une liaison électrique avec une pièce distincte de la carte 3, tel un dispositif électronique de lecture et/ou d'inscription d'informations sur cette carte 3.

Les éléments 3D équipés d'éléments de liaison électriques sont des éléments conducteurs de l'électricité.

Par exemple, l'appareil 1 regroupe :
- une carte 3 de type utilisée pour traiter les informations en provenance d'autres cartes ou pour traiter les transactions bancaires (micro-ordinateur),
- une carte 3 de type permettant d'établir une liaison radio-téléphonique,
- une carte 3 comportant un écran d'affichage d'informations de type tactile, c'est à dire un écran d'affichage qui comprend des zones sensibles à la pression digitale,
- une carte 3 comportant une source d'alimentation électrique,
- une carte 3 comportant un module de mémoire,
- une carte factice 3E, c'est-à-dire une carte constituant simplement une cale d'épaisseur pour le remplissage complet du boîtier.

Par exemple, les cartes sont dites : CPU, mémoire RAM, mémoire EEPROM, écran, clavier, modem, haut-parleur, microphone, cellule solaire, carte téléphone sans fil, carte remplissage, carte de communication infra-rouge. Ces cartes ont avantageusement des dimensions de 86 x 54 x 0,8 mm.

De manière remarquable, l'appareil 1 consiste en un boîtier 5 comprenant :
- des moyens 5A de maintien des cartes à puces qui sont agencés pour maintenir ces cartes chacune dans une position et une orientation déterminée par rapport aux autres,
- des moyens 8 de liaison électrique avec chacun des éléments de liaison électrique 6 d'une carte 3, lesquels sont agencés pour coopérer avec les éléments de liaison électrique d'une carte positionnée dans le boîtier,
- un moyen de gestion des fonctionnalités des différentes cartes placées dans le boîtier, par le biais des connexions électriques 10 établies entre les moyens de liaison 8.

Cela permet de réaliser un appareil électronique 1 de manière modulaire, à partir de cartes à puces 3 prévues pour être isolément utilisées ou d'une manière coopérative (Fig. 1 à 5).

De manière remarquable, les moyens 5A de maintien sont agencés pour maintenir les cartes 3 sous la forme d'une pile et en contact par leurs faces opposées 3A, 3B.

Les moyens 5A de maintien sont constitués par des faces internes 5A du boîtier 5.

Le respect de ces caractéristiques techniques permet d'obtenir le résultat visé par l'invention à savoir un appareil 1 qui présente une épaisseur réduite.

De manière encore remarquable,
- d'une part, les cartes présentent des éléments de liaison électrique 6 qui sont situés sur au moins une de leurs faces latérales (Fig. 3) et,
- d'autre part, les moyens de liaison électrique 8 portés par l'élément de fermeture 11 sont agencés pour coopérer avec des éléments de liaison électrique 6 situés sur l'une au moins des faces latérales d'une carte (Fig.4).

De manière notable, le boîtier 5 présente au moins une fenêtre 9 qui permet l'accès digital à la face libre d'une des cartes constituant les faces opposées de la pile de cartes qu'il regroupe (Fig. 4).

Dans ce cas, c'est la carte comprenant un écran tactile qui est placée devant la fenêtre.

De manière remarquable, le boîtier 5 comprend une trappe de chargement des cartes fermée par un élément amovible de fermeture 11 qui porte les moyens de liaison électrique 8 avec les cartes.

Au moins l'élément de fermeture 11 du boîtier 5 est constitué en matériau électriquement isolant.

Compte tenu de la forme généralement rectangulaire des cartes 3 le boîtier 5 est d'un volume d'enveloppe sensiblement parallélépipédique rectangle, c'est à dire qu'il comprend deux faces principales opposées et quatre faces latérales qui sont étroites par rapport auxdites faces principales.

La trappe de chargement des cartes 3 est réalisée à proximité d'une des faces latérales du boîtier 5, de manière à diviser transversalement le volume interne dudit boîtier en deux parties d'inégales longueurs, chacune à même de s'emboîter sur une fraction du volume défini par l'empilement de cartes 3.

De cette manière, l'une des parties du boîtier 5 et, notamment la plus courte, constitue l'élément 11 amovible qui porte les moyens de liaison électrique 8.

Les deux parties du boîtier 5 s'assemblent selon un plan de joint qui peut être effectivement plan ou brisé.

Avantageusement les deux parties du boîtier 5 sont équipées d'un moyen de verrouillage en position fermée.

Afin de faciliter la lecture du dessin ces dernières particularités techniques n'ont pas été représentées car l'homme du métier est à même, sans avoir nécessairement à faire preuve d'invention, de choisir tant la situation exacte et la forme du plan de joint, que la nature du moyen de verrouillage.

Dans une forme de réalisation, le moyen de gestion des fonctionnalités des différentes cartes 3 est constitué, d'une part, par l'ensemble des connexions électriques 10 établies entre les moyens 8 de liaison électrique et, d'autre part, par au moins l'un des composants électroniques d'une des cartes 3.

Dans une autre forme de réalisation, le moyen de gestion des fonctionnalités des différentes cartes est constitué, d'une part, par l'ensemble des connexions électriques 10 établies entre les moyens 8 de liaison électrique et, d'autre part, par au moins un composant électronique logé dans l'élément amovible 11.

En ce qui concerne les moyens 8 de liaison électrique, ils sont chacun avantageusement constitués par un élément conducteur de l'électricité élastiquement mobile dans une direction d'application vers un élément de liaison électrique 6 d'une carte 3, lorsque le boîtier est fermé.

Par cela l'établissement des liaisons électriques est garanti.

Par exemple, chaque moyen 8 de liaison électrique est constitué par une lame 8 qui comprend :
- une partie fixe solidaire de l'élément amovible de fermeture 11,
- une partie mobile qui, destinée à établir un contact électrique avec un élément de liaison électrique 6 d'une carte 3, est guidé en translation dans l'élément amovible 11, et ce, dans une direction d'application vers un élément de liaison électrique 6 d'une carte 3,
- une partie médiane qui, interposée entre lesdites parties fixe et mobile, est élastiquement déformable au moins dans la direction d'application de la partie mobile.

Par exemple, tel que cela est représenté, la partie médiane de chaque lame est conformée en V.

Bien que cela n'apparaisse pas de manière flagrante sur le dessin, les lames 8 sont électriquement isolées entre elles.

Pour placer les cartes 3 dans le boîtier 5 :
- on forme un empilement de cartes 3 susceptible d'être accueillies par le boîtier 5 en orientant ces cartes de manière telle que leurs éléments de liaison électrique 6 se présentent sur une même face de l'empilement,
- après ouverture du boîtier 5, c'est-à-dire effacement de l'élément amovible 11 qui ferme l'accès à son volume interne, on engage l'empilement de cartes 3 dans la partie la plus longue dudit boîtier 5 jusqu'à les placer en butée sur une face interne de ce boîtier, et ce, par la face de l'empilement qui est opposée à celle réunissant les faces des cartes pourvues d'éléments de liaison électrique 6,
- on engage l'élément amovible 11 sur la partie de l'empilement de cartes 3 qui subsiste de manière à placer les moyens 8 de liaison électrique en relation avec les éléments de liaison électrique 6 des cartes 3,
et finalement, on verrouille l'élément amovible 11 et le boîtier 5.

Tel que cela a été annoncé, l'empilement comprend, par exemple, au moins une carte factice constituant une cale d'épaisseur, de manière telle que ledit empilement s'ajuste exactement au volume interne du boîtier.

## Revendications

1. Appareil électronique caractérisé en ce qu'il comporte un boîtier (5) pour recevoir des cartes à puces ayant des éléments de liaison électrique (6) qui sont situés sur au moins une de leurs faces latérales comprenant :
- des moyens de maintien (5A) des cartes à puces qui sont agencés pour maintenir ces cartes chacune dans une position et une orientation déterminée par rapport aux autres,
- des moyens de liaison électrique (8) avec chacun des éléments de liaison électrique d'une carte, lesquels sont agencés pour coopérer avec les éléments de liaison électrique (6) d'une carte positionnée dans le boîtier (5),
- un moyen de gestion des fonctionnalités des différentes cartes (3) placées dans le boîtier (5), par le biais des connexions électriques (10) établies entre les moyens de liaison (8).

2. Appareil électronique selon la revendication 1, caractérisé en ce que les moyens de maintien (5A) sont agencés pour maintenir les cartes (3) sous la forme d'une pile et en contact par leurs faces opposées.

3. Appareil électronique selon la revendication 1 ou 2, caractérisé en ce que le boîtier (5) présente au moins une fenêtre (9) qui permet l'accès digital à la face libre d'une des cartes constituant les faces opposées de la pile de cartes qu'il regroupe.

4. Appareil électronique selon l'une des revendications 1 à 3, caractérisé en ce que le boîtier (5) comprend une trappe de chargement des cartes et cette dernière porte les moyens de liaison électrique (8) avec les cartes.

5. Appareil électronique selon la revendication 4, comprenant un boîtier (5) d'un volume d'enveloppe sensiblement parallélépipédique rectangle, avec deux faces principales opposées et quatre faces latérales, lequel appareil est caractérisé en ce que la trappe de chargement des cartes (3) est réalisée à proximité d'une des faces latérales du boîtier (5), de manière à diviser transversalement le volume interne dudit boîtier (5) en deux parties d'inégales longueurs, chacune à même de s'emboîter sur une fraction du volume défini par l'empilement de cartes (3).

6. Appareil électronique selon l'une quelconque des revendications 1 à 5 caractérisé en ce que le moyen de gestion des fonctionnalités des différentes cartes (3) est constitué, d'une part, par l'ensemble des connexions électriques (10) établies entre les moyens (8) de liaison électrique et, d'autre part, par au moins l'un des composants électroniques que sont un composant logé dans l'élément amovible (11) et un des composants électroniques d'une des cartes (3).

7. Appareil électronique selon l'une quelconque des revendications 1 à 6 caractérisé en ce que les moyens (8) de liaison électrique sont chacun avantageusement constitués par un élément conducteur de l'électricité élastiquement mobile dans une direction d'application vers un élément de liaison électrique (6) d'une carte (3), lorsque le boîtier est fermé.

8. Carte à puces (3) ayant des éléments de liaison électrique (6) qui sont situés sur au moins une des faces latérales, la carte étant destinée à être introduite dans un appareil électronique défini dans une des revendications 1 à 7.

9. Carte selon la revendication 8 caractérisée en ce qu'elle comprend une ou plusieurs des fonctions suivantes: CPU, mémoire RAM, mémoire EEPROM, écran, clavier, modem, haut-parleur, microphone, cellule solaire, carte téléphone sans-fil, carte remplissage, carte de communication infra-rouge.

10. Carte selon la revendication 8 ou 9 ayant sensiblement les dimensions 86 x 54 x 0,8 mm.
